(19) Europäisches Patentamt
European Patent Office
Office européen des brevets

(11) EP 4 462 162 A1

(12) EUROPEAN PATENT APPLICATION
published in accordance with Art. 153(4) EPC

(43) Date of publication:
13.11.2024 Bulletin 2024/46

(21) Application number: 22918833.9

(22) Date of filing: 21.12.2022

(51) International Patent Classification (IPC):
*G02B 1/04* *(2006.01)* *C08G 59/68* *(2006.01)*

(52) Cooperative Patent Classification (CPC):
C08G 59/68; G02B 1/04

(86) International application number:
PCT/JP2022/047192

(87) International publication number:
WO 2023/132249 (13.07.2023 Gazette 2023/28)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 04.01.2022 JP 2022000161

(71) Applicant: Mitsui Chemicals, Inc.
Tokyo 104-0028 (JP)

(72) Inventors:
- TSUKADA Yuichi
  Sodegaura-shi, Chiba 299-0265 (JP)
- MIZOBE Yuji
  Sodegaura-shi, Chiba 299-0265 (JP)

(74) Representative: Hoffmann Eitle
Patent- und Rechtsanwälte PartmbB
Arabellastraße 30
81925 München (DE)

# (54) RESIN COMPOSITION FOR LENS, CURED PRODUCT FOR LENS, AND LENS

(57) There is provided a resin composition for a lens, which contains a photocationic polymerization initiator (X) including a salt formed from an anion represented by General Formula (1) and a cation and contains an epoxy compound (Y) containing two or more epoxy groups in a molecule. (In General Formula (1), $R^1$ to $R^4$ each independently represent an alkyl group having 1 to 18 carbon atoms or an aryl group having 6 to 14 carbon atoms.)

[Fig.1]

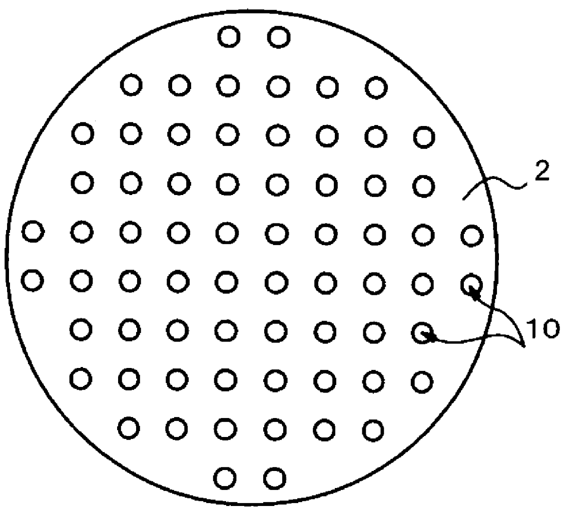




Processed by Luminess, 75001 PARIS (FR)

## Description

TECHNICAL FIELD

The present invention relates to a resin composition for a lens, a cured substance for a lens, and a lens.

BACKGROUND ART

At present, a camera is mounted on a large number of electronic instruments such as a smartphone, a tablet terminal, and a laptop. In addition, along with the miniaturization and high performance of these instruments, the miniaturization and high performance of a lens of a camera to be mounted on the instruments are also strongly desired.

It has been known that a silicone resin or an acrylic resin is used as a material for a lens of a camera to be mounted on these electronic instruments (Patent Documents 1 and 2). In addition, it has been also known to use an epoxy resin as a material (Patent Document 3).

RELATED DOCUMENTS

PATENT DOCUMENTS

[Patent Document 1] PCT Japanese Translation Patent Publication No. 2008-545553
[Patent Document 2] Japanese Unexamined Patent Publication No. 2003-131004
[Patent Document 3] Japanese Unexamined Patent Publication No. 2019-189874

SUMMARY OF THE INVENTION

TECHNICAL PROBLEM

In lens materials in the related art, there is room for improvement in terms of achieving various characteristics required for lenses in a balanced manner, such as optical characteristics and heat resistance.

An object of the present invention is to provide a resin composition for a lens, which makes it possible to form a cured substance for a lens, the cured substance having all of a low curing shrinkage rate, a high refractive index, a high light transmittance, and a high heat resistance.

In addition, another object of the present invention is to provide a cured substance for a lens and a lens, which have all of a low curing shrinkage rate, a high refractive index, a high light transmittance, and a high heat resistance.

SOLUTION TO PROBLEM

The inventors of the present invention carried out diligent studies in order to achieve the above-described objects. As a result, it was found that, in a case where a specific photocationic polymerization initiator and an epoxy compound are used in combination, the above-described objects can be achieved, whereby the present invention was completed.

That is, according to the present invention, a resin composition for a lens, a cured substance for a lens, and a lens are provided as shown below.

[1] A resin composition for a lens, containing:

a photocationic polymerization initiator (X) including a salt formed from an anion represented by General Formula (1) and a cation; and
an epoxy compound (Y) containing two or more epoxy groups in a molecule,

[Chem. 1]

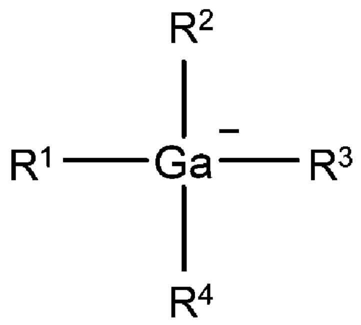

(1)

(in General Formula (1), $R^1$ to $R^4$ each independently represent an alkyl group having 1 to 18 carbon atoms or an aryl group having 6 to 14 carbon atoms).

[2] The resin composition for a lens according to [1], in which the epoxy compound (Y) is represented by General Formula (2),

[Chem. 2]

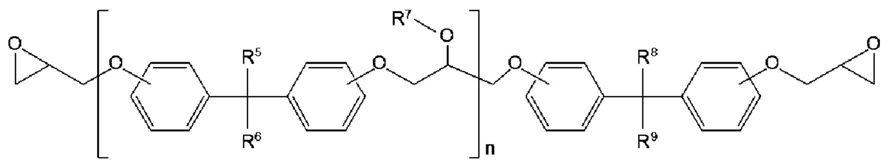

(2)

(in General Formula (2), $R^5$, $R^6$, $R^8$, and $R^9$ each independently represent a hydrogen atom, an alkyl group having 1 to 4 carbon atoms, or a trifluoromethyl group, $R^7$ represents a hydrogen atom or a glycidyl group, and n is an average repetition number, where n represents a real number in a range of 0 to 30).

[3] The resin composition for a lens according to [1] or [2], in which an epoxy equivalent of the epoxy compound (Y) is 100 g/eq or more and 200 g/eq or less.

[4] The resin composition for a lens according to any one of [1] to [3], in which a content of the epoxy compound (Y) is 40% by mass or more in non-volatile components of the resin composition for a lens.

[5] The resin composition for a lens according to any one of [1] to [4], in which the photocationic polymerization initiator (X) contains, as an anion, an anion represented by any of Formula (3) or (4),

[Chem. 3]

$$Ga(C_6F_5)_4^- \quad (3)$$

[Chem. 4]

$$Ga[C_6H_3(CF_3)_2]_4^- \quad (4)$$

[6] The resin composition for a lens according to any one of [1] to [5], in which the photocationic polymerization initiator (X) contains a sulfonium ion as the cation.

[7] The resin composition for a lens according to any one of [1] to [6], further containing:
a monofunctional epoxy compound (Z) represented by General Formula (5),

[Chem. 5]

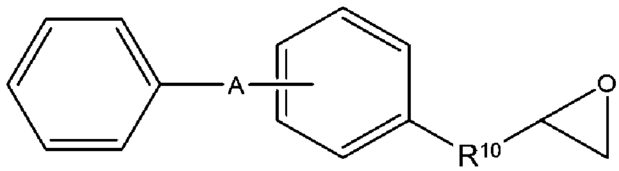

(5)

(in General Formula (5), A is selected from a single bond, an oxygen atom, and a sulfur atom, $R^{10}$ is an alkylene having 1 to 8 carbon atoms, and any methylene group may be substituted with an oxygen atom).

[8] The resin composition for a lens according to [7], in which the monofunctional epoxy compound (Z) is o-phenylphenol glycidyl ether.

[9] The resin composition for a lens according to any one of [1] to [8], further containing:
an oxetane compound (W).

[10] The resin composition for a lens according to any one of [1] to [9], in which the oxetane compound (W) is a biphenyl type oxetane compound.

[11] The resin composition for a lens according to any one of [1] to [10], in which in a case where the resin composition for a lens is subjected to a measurement with an E-type viscometer under conditions of a temperature of 25°C and a rotation speed of 2.5 rpm, a viscosity of the resin composition for a lens is 100 mPa·s or more and 5,000 mPa·s or less.

[12] The resin composition for a lens according to any one of [1] to [11], in which a cured substance satisfies the following requirements (A) to (D), where the cured substance is obtained by applying the resin composition for a lens onto a glass plate to a thickness of 250 μm, carrying out UV exposure under conditions of a wavelength of 365 nm, an irradiation intensity of 150 mW/cm, and an integrated irradiation amount of 3,000 mJ/ $cm^2$, and carrying out heating under conditions of 120°C for 30 minutes in a nitrogen atmosphere,

(A) the cured substance has a curing shrinkage rate of 1.0% or more and 5.0% or less,
(B) the cured substance has a refractive index of 1.57 or more,
(C) the cured substance has a light transmittance of 80% or more in a thickness direction, and
(D) the cured substance has a rate of change in light transmittance after heating (125°C, 168 hours) of 10% or less in the thickness direction.

[13] The resin composition for a lens according to any one of [1] to [12], in which the resin composition for a lens is used for a wafer-level lens.

[14] A cured substance for a lens, which is obtained by curing the resin composition for a lens according to any one of [1] to [13].

[15] A lens including:
the cured substance for a lens according to [14].

## ADVANTAGEOUS EFFECTS OF INVENTION

The resin composition for a lens according to the present invention has the above-described configuration, and thus it is possible to form a cured substance which has all of a low curing shrinkage rate, a high refractive index, a high light transmittance, and a high heat resistance.

In addition, since the cured substance for a lens according to the present invention is obtained by curing the resin composition for a lens, it has all of a low curing shrinkage rate, a high refractive index, a high light transmittance, and a high heat resistance.

Further, due to having a structure in which the cured substance for a lens is laminated, the lens according to the present invention has all of a low curing shrinkage rate, a high refractive index, a high light transmittance, and a high heat resistance.

## BRIEF DESCRIPTION OF THE DRAWINGS

Fig. 1 is a plan view showing an example of a configuration of a wafer-level lens array having a plurality of wafer-level lenses.

## DESCRIPTION OF EMBODIMENTS

Hereinafter, the present invention will be described based on the embodiments.

In the present embodiments, unless otherwise specified, "A to B" that indicates a range of numerical values indicates "equal to or larger than A and equal to or smaller than B".

In the present embodiment, unless otherwise specified, a case where a group such as an alkyl group "has a substituent" means a case where a hydrogen atom present in the structure of the group is substituted with a substituent. The position of the substituent and the number of the substituents are not particularly limited. It is noted that in a case where a substituent has carbon atoms, the number of carbon atoms of the substituent is not included in the number of carbon atoms of a group having the substituent. For example, an ethyl group having a phenyl group as a substituent is regarded as an alkyl group having 2 carbon atoms.

The non-volatile components in the present embodiment are components of the resin composition for a lens, excluding volatile components such as a solvent.

### [Resin composition for lens]

A resin composition for a lens according to the present embodiment contains a photocationic polymerization initiator (X) including a salt formed from an anion represented by General Formula (1) and a cation, and an epoxy compound (Y) containing two or more epoxy groups in a molecule.

[Chem. 6]

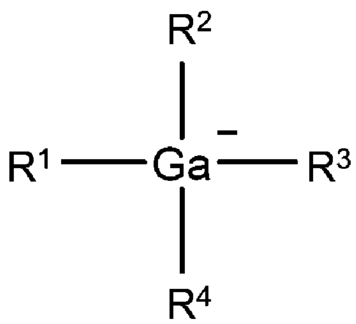

(1)

In General Formula (1), $R^1$ to $R^4$ each independently represent an alkyl group having 1 to 18 carbon atoms or an aryl group having 6 to 14 carbon atoms.

With the resin composition for a lens according to the present embodiment, it is possible to form a cured substance which has all of a low curing shrinkage rate, a high refractive index, a high light transmittance, and a high heat resistance. Although the detailed mechanism is not revealed, it is presumed that since the photocationic polymerization initiator containing anionic gallium hardly generates a strong acid component even in a case of being heated, the deterioration of coloring or the like due to heating is suppressed. In addition, the photocationic polymerization initiator including anionic gallium can suppress adverse effects on various performances such as a curing shrinkage rate, a refractive index, and a light transmittance while exhibiting polymerization performance at a technical level in the related art.

Hereinafter, each component contained in the resin composition for a lens according to the present embodiment will be described in detail.

### <Photocationic polymerization initiator (X)>

The resin composition for a lens according to the present embodiment contains a photocationic polymerization initiator (X) including a salt formed from an anion represented by General Formula (1) and a cation.

[Chem. 7]

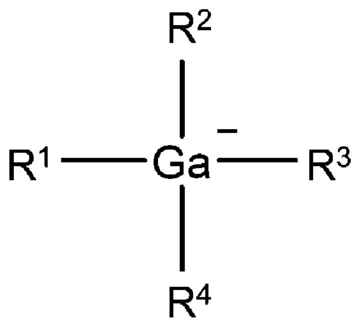

(1)

In General Formula (1), $R^1$ to $R^4$ each independently represent an alkyl group having 1 to 18 carbon atoms or an aryl group having 6 to 14 carbon atoms.

The alkyl group having 1 to 18 carbon atoms, which is represented by $R^1$ to $R^4$ in General Formula (1), is not limited and may be any one of a linear, branched, or cyclic alkyl group.

Specific examples thereof include an alkyl group such as a methyl group, an ethyl group, a propyl group, an isopropyl group, an n-butyl group, a t-butyl group, a hexyl group, an octyl group, a 2-ethylhexyl group, or a decyl group; and a cycloalkyl groups such as a cyclopentyl group, or cyclohexyl group, a cyclooctyl group, a norbornyl group, a bicyclononyl group, or a tricyclodecane group.

Specific examples of the aryl group having 6 to 14 carbon atoms, which is represented by $R^1$ to $R^4$ in General Formula (1), include a phenyl group, a tolyl group, a naphthyl group, a biphenyl group, a terphenyl group, a phenanthryl group, or an anthracenyl group.

The alkyl group having 1 to 18 carbon atoms or the aryl group having 6 to 14 carbon atoms, which is represented by $R^1$ to $R^4$ in General Formula (1), may have a substituent.

The substituent which may be contained in the alkyl group having 1 to 18 carbon atoms or the aryl group having 6 to 14 carbon atoms, which is represented by $R^1$ to $R^4$ in General Formula (1), is not particularly limited. Examples thereof include a halogen atom, a hydrocarbon group, a halogen-containing group, an oxygen-containing group, a sulfur-containing group, and a nitrogen-containing group.

Examples of the halogen atom include a fluorine atom, a chlorine atom, or a bromine atom.

Examples of the hydrocarbon group include an alkyl group such as a methyl group, an ethyl group, a propyl group, an isopropyl group, an n-butyl group, a t-butyl group, a hexyl group, an octyl group, a 2-ethylhexyl group, or a decyl group; and a cycloalkyl groups such as a cyclopentyl group, or cyclohexyl group, a cyclooctyl group, a norbornyl group, a bicyclononyl group, or a tricyclodecane group; an aryl group such as a phenyl group, a tolyl group, a naphthyl group, a biphenyl group, a terphenyl group, a phenanthryl group, or an anthracenyl group; an aralkyl groups such as a benzyl group or a phenylethyl group; and a diene-based divalent derivative group such as a 1,3-butadienyl group, an isoprenyl (2-methyl-1,3-butadienyl) group, a piperidenyl (1,3-pentadienyl) group, a 2,4-hexadienyl group, a 1,4-diphenyl-1,3-pentadienyl group, or a cyclopentadienyl group.

Examples of the halogen-containing group which may be contained in the alkyl group having 1 to 18 carbon atoms, which is represented by $R^1$ to $R^4$ include a halogen-containing hydrocarbon group such as trifluoromethyl, pentafluoroethyl, 1,1,1,3,3,3-hexafluoro-2-propyl, or nonafluoro-t-butyl; and a halogen-containing aryl group such as pentafluorophenyl or pentachlorophenyl.

Examples of the oxygen-containing group include an alkoxy group such as a methoxy group, an ethoxy group, an n-propoxy group, an isopropoxy group, an n-butoxy group, an isobutoxy group, or a t-butoxy group; an aryloxy group such as a phenoxy group, a 2,6-dimethylphenoxy group, or a 2,4,6-trimethylphenoxy group; an ester group such as an acetyloxy group, a benzoyloxy group, a methoxycarbonyl group, a phenoxycarbonyl group, or a p-chlorophenoxycarbonyl group; an ether group; an acyl group such as a formyl group, an acetyl group, a benzoyl group, a p-chlorobenzoyl group, or a p-methoxybenzoyl group; a carboxyl group; a carbonate group; a hydroxy group; a peroxy group; a carboxylic acid anhydride group; and a furyl group.

Examples of the sulfur-containing group include a mercapto group; a thioester group such as an acetylthio group, a benzoylthio group, a methylthiocarbonyl group, or a phenylthiocarbonyl group; a dithioester group; an alkylthio group such as a methylthio group or an ethylthio group; an arylthio group such as a phenylthio group, a methylphenylthio group, or a naphthylthio group; a thioacyl group; a thioether group; a thiocyanic acid ester group; an isothiocyanic acid ester group; a sulfonic acid ester group such as a methyl sulfonate group, an ethyl sulfonate group, or a phenyl sulfonate group; a sulfonamide group such as a phenylsulfonamide group, a N-methylsulfonamide group, or an N-methyl-p-toluenesulfamide group; a thiocarboxyl group; a dithiocarboxyl group; a sulfo group; a sulfonyl group; a sulfinyl group; and a sulfenyl

group.

Examples of the nitrogen-containing group include an amino group; an alkylamino group such as a dimethylamino group or an ethylmethylamino group; an arylamino group such as a diphenylamino group; an imino group; an alkylimino group such as a methylimino group, an ethylimino group, a propylimino group, or a butylimino group; arylimino groups such as a phenylimino group; an amide group; an alkylamide group such as an acetamide group or an N-methylacetamide group; an arylamide group such as an N-methylbenzamide group; an imide group; an alkylimide group such as an acetimide group; an arylimide group such as a benzimide group; a pyrrolidino group; a hydrazino group; a hydrazono group; a nitro group; a nitroso group; a cyano group; an isocyano group; a cyanic acid ester group; an amidino group; a diazo group; and an amino group.

Three or more of $R^1$ to $R^4$ are preferably an aryl group having 6 to 14 carbon atoms, and all of $R^1$ to $R^4$ are more preferably an aryl group having 6 to 14 carbon atoms.

$R^1$ to $R^4$ preferably have a halogen atom as a substituent and more preferably have a fluorine atom as a substituent. Specifically, it is particularly preferable that the photocationic polymerization initiator (X) particularly preferably includes an anion represented by any of Formula (3) or (4) as an anion. This makes it possible to further improve the heat resistance of the cured substance for a lens, which is formed from the resin composition for a lens.

[Chem. 8]

$$Ga(C_6F_5)_4^- \qquad (3)$$

[Chem. 9]

$$Ga[C_6H_3(CF_3)_2]_4^- \qquad (4)$$

The photocationic polymerization initiator (X) contains a cation that forms a salt with an anion represented by General Formula (1).

The cation that forms a salt with the anion represented by General Formula (1) is not particularly limited as long as it is a monovalent cation. Examples thereof include an oxonium ion, an ammonium ion, a phosphonium ion, a sulfonium ion, and an iodonium ion.

Examples of the oxonium ion include oxonium such as trimethyloxonium, diethylmethyloxonium, triethyloxonium, and tetramethylenemethyloxonium; pyrylium such as 4-methylpyrylium, 2,4,6-trimethylpyrylium, 2,6-di-tert-butylpyrylium, and 2,6-diphenylpyrylium; chromenium such as 2,4-dimethylchromenium and 1,3-dimethylisochromium; and isochromenium.

Examples of the ammonium ion include pyrrolidinium such as N,N-dimethylpyrrolidinium, N-ethyl-N-methylpyrrolidinium, and N,N-diethylpyrrolidinium; imidazolinium such as N,N'-dimethylimidazolinium, N,N'-diethylimidazolinium, N-ethyl-N'-methylimidazolinium, 1,3,4-trimethylimidazolinium, and 1,2,3,4-tetramethylimidazolinium; tetrahydropyrimidinium such as N,N'-dimethyltetrahydropyrimidinium; morpholinium such as N,N'-dimethylmorpholinium; piperidinium such as N,N'-diethylpiperidinium; pyridinium such as N-methylpyridinium, N-benzylpyridinium, and N-phenacylpyridinium; imidazolium such as N,N'-dimethylimidazolium; quinolium such as N-methylquinolium, N-benzylquinolium, and N-phenacylquinolium; isoquinolium such as N-methylisoquinolium; thiazonium such as benzylbenzothiazonium and phenacylbenzothiazonium; and acrydinium such as benzylacrydinium and phenacylacrydinium.

Examples of the phosphonium ion include tetraarylphosphoniums such as tetraphenylphosphonium, tetra-p-tolylphosphonium, tetrakis(2-methoxyphenyl)phosphonium, tetrakis(3-methoxyphenyl)phosphonium, and tetrakis(4-methoxyphenyl)phosphonium; triarylphosphoniums such as triphenyl benzylphosphonium, triphenylphenacylphosphonium, triphenylmethylphosphonium, and triphenylbutylphosphonium; and tetraalkylphosphoniums such as triethylbenzylphosphonium, tributylbenzylphosphonium, tetraethylphosphonium, tetrabutylphosphonium, tetrahexylphosphonium, triethylphenacylphosphonium, and tributylphenacylphosphonium.

Examples of the sulfonium ion include triarylsulfoniums such as triphenylsulfonium, tri-p-tolylsulfonium, tri-o-tolylsulfonium, tris(4-methoxyphenyl)sulfonium, 1-naphthyldiphenylsulfonium, 2-naphthyldiphenylsulfonium, tris(4-fluorophenyl)sulfonium, tri-1-naphthylsulfonium, tri-2-naphthylsulfonium, tris(4-hydroxyphenyl)sulfonium, 4-(phenylthio)phenyldiphenylsulfonium, 4-(p-tolylthio)phenyl di-p-tolylsulfonium, 4-(4-methoxyphenylthio)phenylbis(4-methoxyphenyl) sulfonium, 4-(phenylthio)phenylbis(4-fluorophenyl)sulfonium, 4-(phenylthio)phenylbis(4-methoxyphenyl)sulfonium, 4-(phenylthio)phenyl di-p-tolylsulfonium, [4-(4-biphenylthio)phenyl]-4-biphenylylphenylsulfonium, [4-(2-thioxanthonylthio)phenyl]diphenylsulfonium, bis[4-(diphenylsulfonio)phenyl]sulfide, bis[4-{bis[4-(2-hydroxyethoxy)phenyl]sulfonio}phenyl]sulfide, bis{4-[bis(4-fluorophenyl)sulfonio]phenyl}sulfide, bis{4-[bis(4-methylphenyl)sulfonio]phenyl}sulfide, bis{4-[bis(4-methoxyphenyl)sulfonio]phenyl}sulfide, 4-(4-benzoyl-2-chlorophenylthio)phenylbis(4-fluorophenyl)sulfonium, 4-(4-benzoyl-2-chlorophenylthio)phenyldiphenylsulfonium, 4-(4-benzoylphenylthio)phenylbis(4-fluorophenyl)sulfonium, 4-(4-benzoylphenylthio)phenyldiphenylsulfonium, 7-isopropyl-9-oxo-10-thia-9,10-dihydroanthracene-2-yl di-p-tolylsulfonium, 7-isopropyl-9-oxo-10-thia-9,10-dihydroanthracene-2-yl diphenylsulfonium, 2-[(di-p-tolyl)sulfonio]thioxanthone, 2-[(diphenyl)sulfonio]thioxanthone, 4-(9-oxo-9H-thioxanthene-2-yl)thiophenyl-9-oxo-9H-thioxanthene-2-yl phenylsulfonium, 4-[4-(4-tert-butylbenzoyl)phenylthio]phenyl di-p-tolylsulfonium, 4-[4-(4-tert-butylbenzoyl)phenylthio]phenyldiphenylsulfonium, 4-[4-(benzoylphenylthio)]phenyl di-p-tolylonium sulfonium, 4-[4-(benzoylphenylthio)]phenyldiphenylsulfonium, 5-(4-methoxyphenyl)thioanthrenium, 5-phenylthioanthrenium, 5-tolylthioanthrenium, 5-(4-ethoxyphenyl)thioanthrenium, and 5-(2,4,6-trimethylphenyl)thioanthreniumtriarylsulfoniums such as; diarylsulfoniums such as diphenylphenacylsulfonium, diphenyl 4-nitrophenacylsulfonium, diphenylbenzylsulfonium, and diphenylmethylsulfonium; monoarylsulfoniums such as phenylmethylbenzylsulfonium, 4-hydroxyphenylmethylbenzylsulfonium, 4-methoxyphenylmethylbenzylsulfonium, 4-acetocarbonyloxyphenylmethylbenzylsulfonium, 4-hydroxyphenyl (2-naphthylmethyl) methylsulfonium, 2-naphthylmethylbenzylsulfonium, 2-naphthylmethyl (1-ethoxycarbonyl)ethylsulfonium, phenylmethylphenacylsulfonium, 4-hydroxyphenylmethylphenacylsulfonium, 4-methoxyphenylmethylphenacylsulfonium, 4-acetocarbonyloxyphenylmethylphenasylsulfonium, 2-naphthylmethylphenacylsulfonium, 2-naphthyloctadecylphenasylsulfonium, and 9-anthracenylmethylphenacylsulfonium; trialkylsulfoniums such as dimethylphenacyl sulfonium, phenacyltetrahydrothiophenium, dimethylbenzylsulfonium, benzyltetrahydrothiophenium, and octadecylmethylphenacylsulfonium.

Examples of the iodonium ion include diphenyliodonium, dip-tolyliodonium, bis(4-dodecylphenyl)iodonium, bis(4-methoxyphenyl)iodonium, (4-octyloxyphenyl)phenyliodonium, bis(4-decyloxy)phenyliodonium, 4-(2-hydroxytetradecyloxy)phenylphenyliodonium, 4-isopropylphenyl (p-tolyl)iodonium, and 4-isobutylphenyl (p-tolyl)iodonium.and the like can be exemplified.

The photocationic polymerization initiator (X) preferably contains, as a cation, an ammonium ion, a phosphonium ion, a sulfonium ion, or an iodonium ion, more preferably contains a sulfonium ion or an iodonium ion, and still more preferably contains a sulfonium ion.

The photocationic polymerization initiator (X) preferably includes a salt, which is formed from an anion represented by any of Formula (3) or (4) and a sulfonium ion. This makes it possible to further improve the heat resistance of the cured substance for a lens, which is formed from the resin composition for a lens.

[Chem. 10]

$$Ga(C_6F_5)_4^- \quad (3)$$

[Chem. 11]

$$Ga[C_6H_3(CF_3)_2]_4^- \quad (4)$$

Specific examples of the anion contained in the photocationic polymerization initiator (X) are shown below. However, the anion contained in the photocationic polymerization initiator (X) in the present embodiment is not limited thereto.

[Chem. 12]

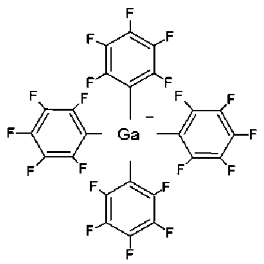
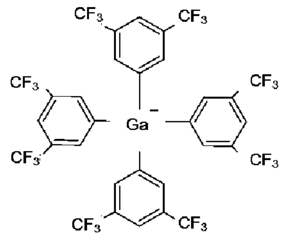
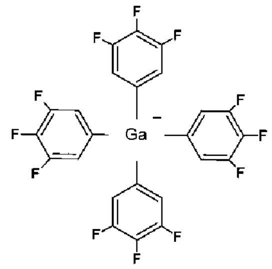
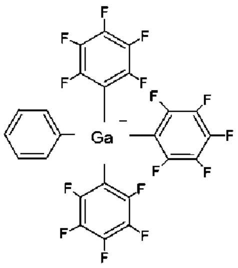
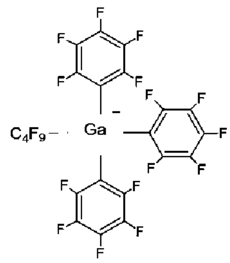
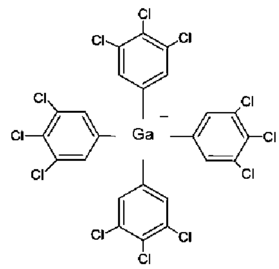
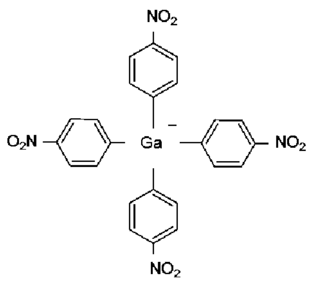
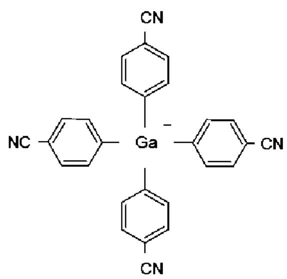
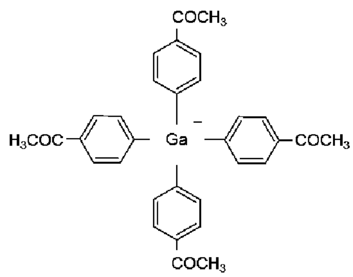

It is possible to synthesize the photocationic polymerization initiator (X) according to, for example, the known method described in Pamphlet of International Publication No. WO2018/020974. In addition, commercially available CPI-310FG (product name: Photocationic Polymerization Initiator, manufactured by San-Apro Ltd.) or the like may be obtained and used.

The content of the photocationic polymerization initiator (X) is preferably 0.05 to 15 parts by mass, more preferably 0.07 to 10 parts by mass, still more preferably 0.1 to 8 parts by mass, and most preferably 0.5 to 5 parts by mass, with respect to 100 parts by mass of the epoxy compound (Y).

One kind of the photocationic polymerization initiator (X) may be used alone, or a plurality of kinds thereof may be mixed and used. In a case where a plurality of kinds thereof are mixed and used, a total of contents of the respective photocationic polymerization initiators (X) is defined as the content of the photocationic polymerization initiator (X).

It is noted that in a case where the photocationic polymerization initiator (X) has a high molar absorption coefficient at a wavelength of 300 to 380 nm, the molar absorption coefficient may be adjusted to an appropriate content according to the volume or thickness in a case of using the resin composition for a lens.

<Epoxy compound (Y)>

The resin composition for a lens according to the present embodiment contains an epoxy compound (Y) containing two or more epoxy groups in the molecule.

Examples of the epoxy compound (Y) having two or more epoxy groups in the molecule include diethylene glycol diglycidyl ether, hexanediol diglycidyl ether, dimethylolpropane diglycidyl ether, polypropylene glycol diglycidyl ether, trimethylolpropane triglycidyl ether, trimethylolpropane triglycidyl ether and pentaerythritol tetraglycidyl ether.

In addition, Examples of the epoxy compound (Y) having two or more epoxy groups in the molecule also include alicyclic epoxy resins such as 3',4'-epoxycyclohexylmethyl-3,4-epoxycyclohexanecarboxylate and ε-caprolactone-modified 3',4'-epoxycyclohexylmethyl-3,4-epoxycyclohexanecarboxylate.

Further, Examples of the epoxy compound (Y) having two or more epoxy groups in the molecule also include epoxy resins having an aromatic ring, such as a bisphenol A type epoxy compound, a bisphenol F type epoxy compound, a biphenyl-phenol novolak type epoxy compound, and an epoxy compound obtained by epoxidizing a part or all of alcoholic

hydroxyl groups contained in the structure of these epoxy compounds.

Examples of commercially available products of the epoxy compound (Y) include EPICLON series (bisphenol A type epoxy resin, manufactured by DIC Corporation) represented by EXA-850CRP, jER series (manufactured by Mitsubishi Chemical Corporation) represented by jER828, YD series (manufactured by NIPPON STEEL Chemical & Material Co., Ltd.) represented by YD-127, and TECHMORE VG3101L (trifunctional epoxy resin, manufactured by Printec Corporation).

The epoxy compound (Y) is preferably an epoxy compound having an aromatic ring. This makes it possible to increase the refractive index of the cured substance obtained by curing the resin composition for a lens and makes it possible to improve the optical characteristics of the lens.

The epoxy compound (Y) is more preferably represented by General Formula (2).

[Chem. 13]

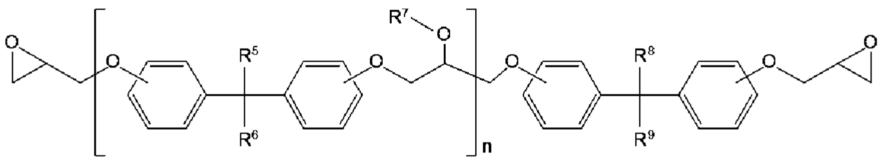

(2)

In General Formula (2),

$R^5$, $R^6$, $R^8$, and $R^9$ each independently represent a hydrogen atom, an alkyl group having 1 to 4 carbon atoms, or a trifluoromethyl group,
$R^7$ represents a hydrogen atom or a glycidyl group, and
n is the average repetition number, where n represents a real number in a range of 0 to 30.

Examples of the alkyl group having 1 to 4 carbon atoms represented by $R^5$, $R^6$, $R^8$, and $R^9$ include those having 1 to 4 carbon atoms among those exemplified as the alkyl group having 1 to 18 carbon atoms represented by $R^1$ to $R^4$.

$R^5$, $R^6$, $R^8$, and $R^9$ are preferably an alkyl group having 1 to 4 carbon atoms or a trifluoromethyl group, more preferably a methyl group or a trifluoromethyl group, and still more preferably a methyl group.

n is preferably 1 to 20, and more preferably 5 to 15. It is noted that n is calculated from the value of the weight average molecular weight calculated in terms of polystyrene, based on the measurement result of gel permeation chromatography (GPC).

The epoxy equivalent of the epoxy compound (Y) is not particularly limited; however, it is preferably 100 g/eq or more and 200 g/eq or less, and more preferably 120 g/eq or more and 180 g/eq or less. It is noted that the epoxy equivalent in the present specification is a value measured by a method in accordance with JIS K7236.

The content of the epoxy compound (Y) in the non-volatile components of the resin composition for a lens according to the present embodiment is preferably 40% by mass or more, more preferably 50% by mass or more, and still more preferably 70% by mass or more.

The upper limit of the content of the epoxy compound (Y) in the non-volatile components of the resin composition for a lens according to the present embodiment is not particularly limited; however, it is typically 99% by mass or less.

One kind of the epoxy compound (Y) may be used alone, or a plurality of kinds thereof may be mixed and used. In a case where a plurality of kinds thereof are mixed and used, a total of contents of the respective epoxy compounds (Y) is defined as the content of the epoxy compound (Y).

<Other components>

The resin composition for a lens according to the present embodiment may contain, as necessary, a monofunctional epoxy compound (Z), an oxetane compound (W), a solvent, an adhesiveness imparting agent, a polyol compound, a polyvalent phenol compound, a sensitizing agent, an ion capture, a photocationic polymerization initiator (another photocationic polymerization initiator) other than the photocationic polymerization initiator (X), and the like.

(Monofunctional epoxy compound (Z))

It is preferable that the resin composition for a lens according to the present embodiment preferably further contains a monofunctional epoxy compound (Z) represented by General Formula (5).

This makes it possible to further improve the heat resistance of the cured substance for a lens, which is formed

from the resin composition for a lens. In addition, it is possible to improve the glass adhesiveness of the resin composition for a lens.

[Chem. 14]

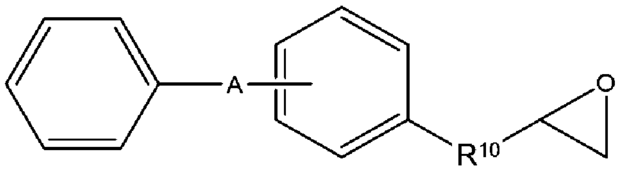

(5)

In General Formula (5), A is selected from a single bond, an oxygen atom, and a sulfur atom, $R^{10}$ is an alkylene having 1 to 8 carbon atoms, and any methylene group may be substituted with an oxygen atom.

$R^{10}$ is preferably an alkylene having 1 to 4 carbon atoms, and more preferably an alkylene having 1 or 2 carbon atoms.

It is preferable that any methylene group as $R^{10}$ is substituted with an oxygen atom.

The monofunctional epoxy compound (Z) is preferably o-phenylphenol glycidyl ether.

Examples of commercially available products of the monofunctional epoxy compound (Z) include OPP-EP (o-phenylphenol glycidyl ether, manufactured by Yokkaichi Chemical Company Limited) and OPP-G (o-phenylphenol glycidyl ether, manufactured by SANKO Inc.).

In a case where the resin composition for a lens according to the present embodiment contains the monofunctional epoxy compound (Z), the content thereof is preferably 1% by mass or more, more preferably 5% by mass or more, and still more preferably 10% by mass or more in the non-volatile components of the resin composition for a lens according to the present embodiment.

In a case where the resin composition for a lens according to the present embodiment contains the monofunctional epoxy compound (Z), the content thereof is preferably 70% by mass or less, more preferably 60% by mass or less, and still more preferably 50% by mass or less in the non-volatile components of the resin composition for a lens according to the present embodiment.

In a case where the resin composition for a lens according to the present embodiment contains the monofunctional epoxy compound (Z), the content thereof is preferably 1 part by mass or more, more preferably 5 parts by mass or more, and still more preferably 10 parts by mass or more, with respect to 100 parts by mass of the epoxy compound (Y).

In a case where the resin composition for a lens according to the present embodiment contains the monofunctional epoxy compound (Z), the content thereof is for example, 200 parts by mass or less, preferably 150 parts by mass or less, still more preferably 100 parts by mass or less, still more preferably 80 parts by mass or less, still more preferably 60 parts by mass or less, still more preferably 40 parts by mass or less, and even still more preferably 25 parts by mass or less, with respect to 100 parts by mass of the epoxy compound (Y).

One kind of the monofunctional epoxy compound (Z) may be used alone, or a plurality of kinds thereof may be mixed and used. In a case where a plurality of kinds thereof are mixed and used, a total of contents of the respective monofunctional epoxy compounds (Z) is defined as the content of the monofunctional epoxy compound (Z).

(Oxetane compound)

It is preferable that the resin composition for a lens according to the present embodiment further contains an oxetane compound (W).

This makes it possible to further improve the heat resistance of the cured substance for a lens, which is formed from the resin composition for a lens. In addition, it is possible to improve the glass adhesiveness of the resin composition for a lens. In addition, this makes it possible to improve the curability of the resin composition.

The oxetane compound (W) is not particularly limited, and a generally known compound can be used. Specific examples of the oxetane compound include oxetane, 2-methyloxetane, 3-methyloxetane, 2,2-dimethyloxetane, 3,3-dimethyloxetane, 3-ethyl-3-hydroxymethyloxetane, and a biphenyl type oxetane.

One kind of the oxetane compound (W) may be used alone, or a plurality of kinds thereof may be mixed and used. In a case where a plurality of kinds thereof are mixed and used, a total of contents of the respective oxetane compounds (W) is defined as the content of the oxetane compound (W).

The oxetane compound (W) is preferably a biphenyl type oxetane compound. Specific examples of the biphenyl type oxetane include xylylene bisoxetane.

Examples of commercially available products of the oxetane compound (W) include ARONE OXETANE OXT-101 (3-ethyl-3-hydroxymethyloxetane, manufactured by Toagosei Company, Limited) and ARONE OXETANE

OXT-121 (xylylene bisoxetane, manufactured by Toagosei Company, Limited).

In a case where the resin composition for a lens according to the present embodiment contains the oxetane compound (W), the content thereof is preferably 0.01% by mass or more, more preferably 0.1% by mass or more, still more preferably 1% by mass or more, and even still more preferably 2% by mass or more in the non-volatile components of the resin composition for a lens according to the present embodiment from the viewpoint of improving glass adhesiveness, heat resistance, and curability.

In a case where the resin composition for a lens according to the present embodiment contains the oxetane compound (W), the content thereof is preferably 50% by mass or less, more preferably 40% by mass or less, still more preferably 30% by mass or less, still more preferably 20% by mass or less, and even still more preferably 10% by mass or less.

In a case where the resin composition for a lens according to the present embodiment contains the oxetane compound (W), the content thereof is preferably 1 part by mass or more, more preferably 5 parts by mass or more, and still more preferably 10 parts by mass or more, with respect to 100 parts by mass of the epoxy compound (Y).

In a case where the resin composition for a lens according to the present embodiment contains the oxetane compound (W), the content thereof is, for example, 200 parts by mass or less, preferably 150 parts by mass or less, still more preferably 100 parts by mass or less, still more preferably 80 parts by mass or less, still more preferably 60 parts by mass or less, still more preferably 40 parts by mass or less, still more preferably 25 parts by mass or less, and even still more preferably 15 parts by mass or less.

(Solvent)

The solvent contained in the resin composition for a lens according to the present embodiment is not particularly limited; however, those that are capable of dissolving each component of the resin composition for a lens are preferably used. Examples of such organic solvents include ketones such as acetone, ethyl methyl ketone, methyl isobutyl ketone, cyclohexanone, and cyclopentanone; aromatic hydrocarbons such as toluene, xylene, methoxybenzene, and tetramethylbenzene; glycol ethers such as diglyme, dipropylene glycol dimethyl ether, and dipropylene glycol diethyl ether; esters such as ethyl lactate, butyl lactate, propyl lactate, ethyl acetate, methyl acetoacetate, ethyl acetoacetate, methyl propionate, ethyl propionate, propyl propionate, isopropyl propionate, methyl 2-hydroxypropionate, ethyl 2-hydroxypropionate, methyl-3-methoxypropionate, ethyl-3-methoxypropionate, ethyl-3-ethoxypropionate, propyl-3-methoxypropionate, butyl acetate, butyl cellosolve acetate, carbitol acetate, and propylene glycol monomethyl ether acetate; lactones such as α-acetolactone, β-propiolactone, γ-butyrolactone, and δ-valerolactone; alcohols such as methanol, ethanol, cellosolve, and methyl cellosolve; aliphatic hydrocarbons such as octane and decane; and petroleum-based solvents such as petroleum ether, petroleum naphtha, hydrogenated petroleum naphtha, and solvent naphtha.

In a case where the resin composition for a lens according to the present embodiment contains a solvent, the content thereof is not particularly limited as long as it is in a range where the effect of the present invention is not impaired, and the content thereof is typically 95% by mass or less and preferably 10% to 90% by mass.

One kind of the solvent may be used alone, or a plurality of kinds thereof may be mixed and used. In a case where a plurality of kinds thereof are mixed and used, a total of contents of the respective solvents is defined as the content of the solvent.

In a case where the epoxy compound (Y) is liquid at ordinary temperature, coating and the like can be suitably carried out even in a case where no solvent is blended or substantially no solvent is blended.

(Adhesiveness imparting agent)

The adhesiveness imparting agent contained in the resin composition for a lens according to the present embodiment is not particularly limited, and a known silane coupling agent or titanium coupling agent, or the like can be used. From the viewpoint of improving glass adhesiveness, it is preferable to use a silane coupling agent.

Examples of the silane coupling agent include 3-chloropropyltrimethoxysilane, vinyltrichlorosilane, vinyltriethoxysilane, vinyltrimethoxysilane, vinyl tris(2-methoxyethoxy)silane, 3-methacryloxypropyltrimethoxysilane, 2-(3,4-epoxycyclohexyl)ethyltrimethoxysilane, 3-glycidoxypropyltrimethoxysilane, 3-glycidoxypropyltriethoxysilane, 3-glycidoxypropylmethyldimethoxysilane, 3-glycidoxypropylmethyldiethoxysilane,3-mercaptopropyltrimethoxysilane, and 8-glycidyloctyltrimethoxysilane.

In a case where the resin composition for a lens according to the present embodiment contains an adhesiveness imparting agent, the content thereof is not particularly limited as long as it is in a range where the effect of the present invention is not impaired, and the content thereof is preferably 15% by mass or less, more preferably 10% by mass or less, still more preferably 5% by mass or less, and even still more preferably 2% by mass or less in the non-volatile components of the resin composition for a lens according to the present embodiment.

In a case where the resin composition for a lens according to the present embodiment contains an adhesiveness

imparting agent, the content thereof is not particularly limited as long as it is in a range where the effect of the present invention is not impaired, and the content thereof is preferably 0.1% by mass or more, more preferably 0.5% by mass or more, and still more preferably 0.8% by mass or more in the non-volatile components of the resin composition for a lens according to the present embodiment.

One kind of the adhesiveness imparting agent may be used alone, or a plurality of kinds thereof may be mixed and used. In a case where a plurality of kinds thereof are mixed and used, a total of contents of the respective adhesiveness imparting agents is defined as the content of the adhesiveness imparting agent.

(Polyol compound)

The polyol compound contained in the resin composition for a lens according to the present embodiment is not particularly limited; however, it is typically a polyester polyol-based compound containing a hydroxy group that reacts with an epoxy group under the influence of a strong acid catalyst. For example, it is possible to use the polyol compound described in Japanese Examined Patent Publication No. 5901070.

In a case where the resin composition for a lens according to the present embodiment contains a polyol compound, the content thereof is not particularly limited as long as it is in a range where the effect of the present invention is not impaired, and the content thereof is typically 1 to 30 parts by mass and preferably 2 to 25 parts by mass with respect to 100 parts by mass of the epoxy compound (Y).

One kind of the polyol compound may be used alone, or a plurality of kinds thereof may be mixed and used. In a case where a plurality of kinds thereof are mixed and used, a total of contents of the respective polyol compounds is defined as the content of the polyol compound.

The polyvalent phenol compound contained in the resin composition for a lens according to the present embodiment is a compound that is capable of curing, by heating, an epoxy compound at a high crosslinking density. For example, it is possible to use the polyvalent phenol compound described in Japanese Examined Patent Publication No. 5967824.

(Polyvalent phenol compound)

In a case where the resin composition for a lens according to the present embodiment contains a polyvalent phenol compound, the content thereof is not particularly limited as long as it is in a range where the effect of the present invention is not impaired, and the content thereof is typically 3 to 40 parts by mass, preferably 4 to 30 parts by mass, and more preferably 5 to 25 parts by mass, with respect to 100 parts by mass of the epoxy compound (Y).

One kind of the polyvalent phenol compound may be used alone, or a plurality of kinds thereof may be mixed and used. In a case where a plurality of kinds thereof are mixed and used, a total of contents of the respective polyvalent phenol compounds is defined as the content of the polyvalent phenol compound.

(Sensitizing agent)

The sensitizing agent contained in the resin composition for a lens according to the present embodiment plays a role in providing the absorbed light energy to the photocationic polymerization initiator. Examples thereof include thioxanthones and an anthracene compound having an alkoxy group at the 9-position and the 10-position (a 9,10-dialkoxyanthracene derivative).

In a case where the resin composition for a lens according to the present embodiment contains a sensitizing agent, the content thereof is not particularly limited as long as it is in a range where the effect of the present invention is not impaired, and the content thereof is preferably 30 parts by mass or less and more preferably 20 parts by mass or less with respect to 100 parts by mass of the photocationic polymerization initiator (X).

In a case where the resin composition for a lens according to the present embodiment contains a sensitizing agent, the content thereof is not particularly limited as long as it is in a range where the effect of the present invention is not impaired, and the content thereof is typically 0.1 parts by mass or more with respect to 100 parts by mass of the photocationic polymerization initiator (X).

One kind of the sensitizing agent may be used alone, or a plurality of kinds thereof may be mixed and used. In a case where a plurality of kinds thereof are mixed and used, a total of contents of the respective sensitizing agents is defined as the content of the sensitizing agent.

(Ion capture)

The ion capture contained in the resin composition for a lens according to the present embodiment can reduce the adverse effects due to ions derived from the photocationic polymerization initiator (X). For example, it is possible to use, as

the ion capture, organic aluminum compounds or an onium weak acid salt compound that generates a weak acid upon irradiation with ultraviolet rays.

In a case where the resin composition for a lens according to the present embodiment contains an ion capture, the content thereof is not particularly limited as long as it is in a range where the effect of the present invention is not impaired. In a case of organic aluminum compounds, the content thereof is preferably 0.1 to 10 parts by mass with respect to 100 parts by mass of the photocationic polymerization initiator (X). In a case of the onium weak acid salt compound, the content thereof is preferably 0.001 to 2 parts by mass with respect to 100 parts by mass of the photocationic polymerization initiator (X).

One kind of the ion capture may be used alone, or a plurality of kinds thereof may be mixed and used. In a case where a plurality of kinds thereof are mixed and used, a total of contents of the respective ion captures is defined as the content of the ion capture.

(Another photocationic polymerization initiator)

The resin composition for a lens according to the present embodiment may contain a photocationic polymerization initiator (another photocationic polymerization initiator) other than the photocationic polymerization initiator (X).

The other photocationic polymerization initiator contained in the resin composition for a lens according to the present embodiment is not particularly limited, and a known photocationic polymerization initiator can be used.

Examples of the other photocationic polymerization initiator include an agent having, as an anion, $[(R_{20})_sB(Phf)_{4-s}]^-$ (in the formula, $R_{20}$ represents a phenyl group or a biphenylyl group, Phf represents a phenyl group in which at least one hydrogen atom is substituted with at least one selected from a perfluoroalkyl group, a perfluoroalkoxy group, and a halogen atom, and s is an integer of 0 to 3), $BF_4^-$, $[(Rf)_nPF_{6-n}]^-$ (Rf: an alkyl group in which 80% or more of hydrogen atoms are substituted with a fluorine atom, n: an integer of 0 to 5), $AsF_6^-$, $SbF_6^-$, pentafluorohydroxyantimonate, or the like.

The content of the other photocationic polymerization initiator is not particularly limited as long as the effect of the present invention is not impaired; however, the content thereof is preferably 50 parts by mass or less, more preferably 20 parts by mass or less, and still more preferably 10 parts by mass or less, with respect to 100 parts by mass of the photocationic polymerization initiator (X).

One kind of the other photocationic polymerization initiator may be used alone, or a plurality of kinds thereof may be mixed and used. In a case where a plurality of kinds thereof are mixed and used, a total of contents of the respective other photocationic polymerization initiators is defined as the content of the other photocationic polymerization initiator.

(Other additives)

The resin composition for a lens according to the present embodiment may contain, as necessary, various components such as an antioxidant, a light stabilizer, a thermoplastic resin, a coloring agent, a thickener, an anti-foaming agent, and a leveling agent, in addition to the above components.

It is preferable that the resin composition for a lens according to the present embodiment further contains an antioxidant.

Examples of the antioxidant include a phenol-based antioxidant, a phosphorus-based antioxidant, a thioether-based antioxidant, and a hindered amine-based antioxidant.

The antioxidant preferably includes a phenol-based antioxidant and more preferably includes a hindered phenol-based antioxidant.

Examples of the hindered phenol-based antioxidant include 2,6-di-t-butylhydroxytoluene and pentaerythritol tetrakis[3-(3,5-di-tert-butyl-4-hydroxyphenyl)propionate].

Examples of commercially available products of the hindered phenol-based antioxidant include ADEKA STAB series AO-20, AO-30, AO-40, AO-50, AO-60, and AO-80, manufactured by ADEKA Corporation.

Examples of the phosphorus-based antioxidant include phosphines such as a trialkylphosphine and a triarylphosphine, a trialkyl phosphite, and a triaryl phosphite.

Examples of commercially available products of the phosphorus-based antioxidant include ADEKA STAB series PEP-4C, PEP-8, PEP-24G, PEP-36, and HP-10, 260, 522A, 329K, 1178, 1500, 135A, and 3010 manufactured by ADEKA Corporation.

Examples of commercially available products of thioether-based antioxidants include ADEKA STAB series AO-26, AO-412S, and AO-503A, manufactured by ADEKA Corporation.

Examples of the hindered amine-based antioxidant include bis(1,2,2,6,6-pentamethyl-4-piperidinyl)sebacate, methyl (1,2,2,6,6-pentamethyl-4-piperidinyl)sebacate, 2,4-bis[N-butyl-N-(1-cyclohexyloxy-2,2,6,6-tetramethylpiperidine-4-yl)amino]-6-(2-hydroxyethylamine)-1,3,5-triazine, a decanedioic acid bis(2,2,6,6-tetramethyl-1-(octyloxy)-4-piperidinyl) ester, and bis(1,2,2,6,6-pentamethyl-4-piperidyl) sebacate.

Examples of commercially available products of the hindered amine-based antioxidant include hindered amine-based antioxidants such as ADEKA STAB series AL-72 manufactured by ADEKA Corporation and TINUVIN series 111FDL, 123, 144, 152, 292, and 5100, manufactured by BASF SE.

In a case where two or more antioxidants are used in combination, a combined use of a phenol-based antioxidant and a hindered amine-based antioxidant and a combined use of a phenol-based antioxidant and a thioether-based antioxidant are preferable.

In a case where the resin composition for a lens according to the present embodiment contains an antioxidant, the content thereof may be appropriately set according to the intended purpose. However, from the viewpoint of obtaining a cured substance that is less colored, the content thereof is preferably 0.01 parts by mass or more and more preferably 0.1 parts by mass or more with respect to the total amount which is a total amount of the epoxy compound (Y), the monofunctional epoxy compound (Z), and the oxetane compound (W) is set to 100 parts by mass, and from the viewpoint of obtaining a resin composition having excellent curability, the content thereof is preferably 5 parts by mass or less and more preferably 1 parts by mass or less.

It is preferable that the resin composition for a lens according to the present embodiment preferably further contains a light stabilizer.

The light stabilizer according to the present embodiment preferably includes a hindered amine-based light stabilizer. Examples of the hindered amine light stabilizer include the compounds such as bis(1,2,2,6,6-pentamethyl-4-piperidyl) sebacate and the commercially available products, which are exemplified as the hindered amine-based antioxidant.

In a case where the resin composition for a lens according to the present embodiment contains a light stabilizer, the content thereof is preferably 0.01 parts by mass or more and more preferably 0.05 parts by mass or more, and it is preferably 1 part by mass or less and more preferably 0.5 parts by mass or less, with respect to the total amount which is a total amount of the epoxy compound (Y), the monofunctional epoxy compound (Z), and the oxetane compound (W) is set to 100 parts by mass.

<Manufacturing method>

The resin composition for a lens according to the present embodiment can be obtained by mixing and stirring the above-described respective components by an ordinary method. Alternatively, as necessary, dispersion and mixing may be carried out using a disperser such as a dissolver, a homogenizer, or a three-roll mill. In addition, after mixing, filtration may be further carried out using a mesh, a membrane filter, or the like.

<Physical properties>

The viscosity of the resin composition for a lens according to the present embodiment can be measured with, for example, an E-type viscometer.

The viscosity, which is obtained by subjecting the resin composition for a lens according to the present embodiment to measurement using an E-type viscometer under conditions of a temperature of 25°C and a rotation speed of 2.5 rpm, is preferably 100 mPa·s or more and 5,000 mPa·s or less, more preferably 200 mPa·s or more and 3,000 mPa·s or less, and still more preferably 500 mPa·s or more and 2,000 mPa·s or less.

In the resin composition for a lens of the present embodiment, a curing shrinkage rate of a cured substance (α) for a lens, which is obtained by applying the resin composition for a lens onto a glass plate to a thickness of 250 μm, carrying out UV exposure under conditions of a wavelength of 365 nm, an irradiation intensity of 150 mW/cm, and an integrated irradiation amount of 3,000 mJ/ $cm^2$, and carrying out heating under conditions of 120°C for 30 minutes in a nitrogen atmosphere, is preferably 1.0% or more and 5.0% or less, more preferably 1.2% or more and 4.0% or less, and still more preferably 1.5% or more and 3.0% or less.

In a case where the curing shrinkage rate of the cured substance (α) for a lens is in the above range, the dimensional accuracy in lens manufacturing can be improved.

The curing shrinkage rate of the cured substance (α) for a lens can be determined according to the following procedure.

First, a specific gravity $d_1$ of the resin composition for a lens is determined according to JIS Z 8804:2012 (Methods of measuring density and specific gravity of liquid). It is noted that in a case where the resin composition for a lens contains volatile components, a specific gravity of non-volatile components excluding the volatile components is determined.

Subsequently, a specific gravity $d_2$ of the cured substance (α) for a lens is determined according to JIS Z 8807:2012 (Methods of measuring density and specific gravity of solid). Using the obtained specific gravity values, the curing shrinkage rate is calculated according to the following expression.

$$\text{Curing shrinkage rate (\%)} = (1 - d_1/d_2) \times 100$$

In the resin composition for a lens of the present embodiment, the refractive index of the cured substance (α) for a lens, which is obtained under the conditions described above is preferably 1.57 or more, more preferably 1.58 or more, and still more preferably 1.59 or more.

In a case where the refractive index of the cured substance (α) for a lens is in the above range, the optical characteristics of the lens can be improved.

The refractive index of the cured substance (α) for a lens can be measured with an Abbe refractometer.

In the resin composition for a lens of the present embodiment, it is preferable that a light transmittance $T_1$ in a thickness direction of the cured substance (α) for a lens, which is obtained in the conditions described above, is 80% or more.

In a case where the light transmittance of the cured substance (α) for a lens is in the above range, it is possible to manufacture a lens having a higher transparency.

The light transmittance $T_1$ in the thickness direction of the cured substance (α) for a lens can be measured at a measurement wavelength of 400 nm by a transmission method using an ultraviolet-visible near-infrared spectrophotometer.

In the resin composition for a lens of the present embodiment, a rate of change in light transmittance after heating (125°C, 168 hours) in the thickness direction in the cured substance (α) for a lens, which is obtained under the conditions described above, is preferably 10% or less, more preferably 5% or less, and still more preferably 2% or less.

In a case where the rate of change in light transmittance in the cured substance (α) for a lens after heating is in the above range, it is possible to manufacture a lens having more excellent heat resistance.

The rate of change in light transmittance after heating (125°C, 168 hours) in the thickness direction in the cured substance (α) for a lens can be determined according to the following procedure.

First, the cured substance (α) for a lens is heated for 168 hours in an oven set at 125°C in an air atmosphere. Thereafter, the light transmittance in the thickness direction is measured under the above conditions to obtain a light transmittance $T_2$ after heating, and a calculation is carried out according to the following expression.

$$\text{Rate (\%) of change in light transmittance after heating (125°C, 168 hours)} = (T_1 - T_2)/T_1 \times 100$$

In the resin composition for a lens of the present embodiment, it is preferable that the cured substance (α) that is obtained under the above conditions satisfies the following requirements (A) to (D).

(A) The curing shrinkage rate of the cured substance is 1.0% or more and 5.0% or less.
(B) The cured substance has a refractive index of 1.57 or more.
(C) The cured substance has a light transmittance of 80% or more in a thickness direction.
(D) The cured substance has a rate of change in light transmittance after heating (125°C, 168 hours) of 10% or less in the thickness direction.

In a case where the cured substance (α) for a lens satisfies the requirements (A) to (D), it is possible to manufacture a lens, which has all of dimensional accuracy, optical characteristics, transparency, and heat resistance.

<Use application>

The resin composition for a lens according to the present embodiment is suitably used for a wafer-level lens.

The wafer-level lens is a lens that is manufactured by making several lenses on a wafer-shaped resin (a wafer-level lens array) at the same time and cutting the lenses.

Fig. 1 is a plan view showing an example of a configuration of a wafer-level lens array having a plurality of wafer-level lenses. As shown in Fig. 1, a wafer-level lens array 1 includes a substrate 2 and a plurality of lenses 10 arranged on the substrate 2. The plurality of lenses 10 are formed to be arranged in one-dimensional or two-dimensional manner with respect to the substrate 2. The lenses 10 formed on the wafer-level lens array 1 are subsequently cut one by one.

Therefore, the wafer-level lens has the advantage that several hundred or more lenses can be produced at one time, which provides excellent production efficiency.

Further, the wafer-level lens also has the advantage that it is possible to manufacture a lens that pursues thinness and smallness, which is limited in the injection molding. The size of the wafer-level lens is usually about 1 to 10 mm in diameter and about 100 to 2,000 um in thickness, and by utilizing this size, the wafer-level lens is suitably used in a camera of an electronic instrument such as a smartphone, a tablet terminal, or a laptop.

Since the resin composition for a lens of the present embodiment, is capable of forming a cured substance for a lens, which have all of a low curing shrinkage rate, a high refractive index, a high light transmittance, and a high heat resistance, it is suitably used for a wafer-level lens that pursues thinness and smallness.

[Cured substance for lens]

The cured substance for a lens according to the present embodiment can be obtained by curing the above-described resin composition for a lens.

The curing shrinkage rate of the cured substance for a lens according to the present embodiment is preferably 1.0% or more and 5.0% or less, more preferably 1.2% or more and 4.0% or less, and still more preferably 1.5% or more and 3.0% or less. The curing shrinkage rate can be determined according to the above-described procedure as a procedure for measuring the curing shrinkage rate of the cured substance ($\alpha$) for a lens.

The refractive index of the cured substance for a lens according to the present embodiment is preferably 1.57 or more, more preferably 1.58 or more, and still more preferably 1.59 or more. The refractive index can be determined according to the above-described procedure as a procedure for measuring the refractive index of the cured substance ($\alpha$) for a lens.

The light transmittance of the cured substance for a lens according to the present embodiment is preferably 80% or more in the thickness direction. The light transmittance can be determined according to the above-described procedure as a procedure for measuring the light transmittance of the cured substance ($\alpha$) for a lens.

In the cured substance for a lens according to the present embodiment, a rate of change in light transmittance after heating (125°C, 168 hours) in the thickness direction, is preferably 10% or less, more preferably 5% or less, and still more preferably 2% or less. The rate of change in light transmittance after heating (125°C, 168 hours) can be determined according to the above-described procedure as a measurement procedure for the rate of change in light transmittance after heating (125°C, 168 hours) in the cured substance ($\alpha$) for a lens.

Since the cured substance for a lens according to the present embodiment has all of a low curing shrinkage rate, a high refractive index, a high light transmittance, and a high heat resistance, it is suitably used for a wafer-level lens that pursues thinness and smallness.

[Lens]

The lens according to the present embodiment contains the above-described cured substance for a lens.

The lens according to the present embodiment can be manufactured by, for example, imprint molding. The imprint molding is a processing technique of sandwiching a resin composition for a lens between lens molding dies and transferring a pattern. The resin composition for a lens, which is sandwiched between the lens molding dies is cured by heating or light irradiation.

The light irradiation can be carried out by using, for example, a mercury lamp, a xenon lamp, a carbon arc lamp, a metal halide lamp, sunlight, an electron beam source, a laser light source, an LED light source, or the like, and carrying out irradiation so that the integrated irradiation amount is, for example, in a range of 500 to 5,000 $mJ/cm^2$.

The resin composition for a lens (the cured substance for a lens), which is sandwiched between lens molding dies, may be used as it is as a lens; however, the cured substance for a lens may be laminated with another material.

Examples of the other material to be laminated with the cured substance for a lens include glass. Since there are many kinds of glass, and a glass having a high refractive index can be selected, the glass is suitable as a lens material that requires high optical characteristics. In addition, the glass has an advantage that heat resistance is excellent.

In addition, a resin may be used. The resin has excellent processability and is suitable for forming a lens easily and at a low cost.

In addition, in a case where a wafer-level molding die is used as the lens molding die, a wafer-level lens array is obtained, and the obtained wafer-level lens array is cut one by one to obtain lenses. The wafer-level lens array is as described above.

Since the lens according to the present embodiment has all of a low curing shrinkage rate, a high refractive index, a high light transmittance, and a high heat resistance, it is suitably used as a wafer-level lens that pursues thinness and smallness.

The diameter of the wafer-level lens is usually 1 to 10 mm, and preferably 1 to 5 mm. In addition, the thickness of the wafer-level lens is usually 100 to 2,000 um, and preferably 100 to 1,000 $\mu$m.

The wafer-level lens is suitably used in a camera of an electronic instrument such as a smartphone, a tablet terminal, or a laptop.

The embodiments according to the present invention have been described above. However, these are examples of the present invention, and various configurations other than the above can be adopted.

In addition, the present invention is not limited to the above-described embodiments and thus includes

modifications and improvements within a range which makes it possible to achieve the object of the present invention.

Examples

Hereinafter, the present embodiment according to the present invention will be described in detail based on Examples. However, the present embodiment according to the present invention is not limited to these Examples.

<Preparation of resin composition for lens>

The raw materials shown in Table 1 were stirred and mixed while heating at 50°C until the resultant mixture became uniform, whereby a resin composition for a lens was obtained.
The raw materials described in Table 1 are as follows.

· Photocationic polymerization initiator (X)

Triarylsulfonium-tetrakispentafluorophenyl gallate, manufactured by San-Apro Ltd., product name: CPI-310FG

· Another photocationic polymerization initiator

A photocationic polymerization initiator represented by the following formula, manufactured by San-Apro Ltd., product name: CPI-210S

[Chem. 15]

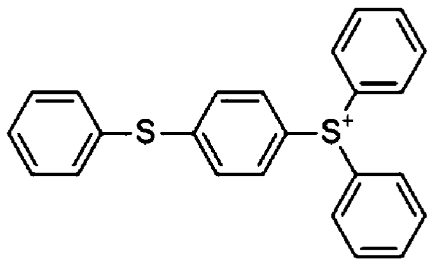

$^{-}PF_n(Rf)_{6-n}$

· Epoxy compound (Y)
Bisphenol A type epoxy resin, manufactured by DIC Corporation, product name: EXA-850CRP, epoxy equivalent: 158 to 168 g/eq
· Monofunctional epoxy compound (Z)
o-phenylphenol glycidyl ether, manufactured by Yokkaichi Chemical Company Limited, product name: OPP-EP
· Oxetane compound (W)
Biphenyl type oxetane compound, xylylene bisoxetane, manufactured by Toagosei Company, Limited, product name: ARONE OXETANE OXT-121
· Adhesiveness imparting agent
Silane coupling agent, 3-glycidoxypropyltrimethoxysilane, manufactured by Shin-Etsu Chemical Co., Ltd., product name: KBM-403
· Antioxidant
Phenol-based antioxidant, pentaerythritol tetrakis[3-(3,5-di-tert-butyl-4-hydroxyphenyl)propionate], manufactured by ADEKA Corporation, product name: ADEKA STAB AO-60
· Light stabilizer
Hindered amine-based light stabilizer, bis(1,2,2,6,6-pentamethyl-4-piperidyl) sebacate, manufactured by ADEKA Corporation, product name: ADEKA STAB LA-72)

<Viscosity>

Using an E-type viscometer (TVE-25L, manufactured by TOKI SANGYO Co., Ltd.), the viscosity of the resin composition for a lens was measured under conditions of a temperature of 25°C and a rotation speed of 2.5 rpm. A cone

plate was appropriately selected from 1°34' × R24, 3° × R14, and 3° × R9.7 depending on the viscosity of the sample. The results are shown in Table 1.

<Production of cured substance for lens>

A glass substrate (9.0 × 10.0 × 0.7 mm, Eagle-XG, manufactured by Corning Inc.) was immersed in Novec (registered trademark) 1720 (fluorinated silane-based mold releasing agent, manufactured by 3M Company), heated at 100°C for 25 minutes in a nitrogen atmosphere, and rinsed with Novec (registered trademark) 7100 (fluorine-based solvent, manufactured by 3M Corporation) to obtain a mold release-treated glass substrate.

The resin composition for a lens was dropped onto the mold release-treated glass substrate and sandwiched with a mold release-treated glass substrate with a silicone spacer having a thickness of 250 um being interposed therebetween, followed by fixing with a clip. On the other hand, using an electrodeless lamp (H bulb), UV exposure was carried out such that the irradiation intensity at a wavelength of 365 nm was 150 mW/cm and the integrated irradiation amount was 3,000 mJ/ $cm^2$, and then the resin composition for a lens was cured.

Subsequently, the cured resin composition for a lens was released from the glass substrate and heated at 120°C for 30 minutes in a nitrogen atmosphere to obtain a cured substance for a lens.

<Curing shrinkage rate>

First, a specific gravity $d_1$ of the resin composition for a lens was determined according to JIS Z 8804:2012 (Methods of measuring density and specific gravity of liquid). (It is noted that in a case where the resin composition for a lens contains volatile components, a specific gravity of non-volatile components excluding the volatile components is determined; however, the resin composition of the present example does not contain volatile components.)

Subsequently, a specific gravity $d_2$ of the cured substance for a lens was determined according to JIS Z 8807:2012 (Methods of measuring density and specific gravity of solid). Using the obtained specific gravity values, the curing shrinkage rate was calculated according to the following expression. The results are shown in Table 1.

$$\text{Curing shrinkage rate (\%)} = (1 - d_1/d_2) \times 100$$

<Measurement of refractive index>

The refractive index of the cured substance for a lens was measured using an Abbe refractometer (DR-M2, manufactured by ATAGO CO., LTD.). A sample temperature was set to 25°C, and measurement was carried out using RE-3520 (589 nm, D line, manufactured by ATAGO CO., LTD.) as an interference filter and RE-1196 (monobromonaphthalene, manufactured by ATAGO CO., LTD.) as an intermediate solution. The results are shown in Table 1.

<Light transmittance>

The light transmittance of the cured substance for a lens in the thickness direction was measured under the following conditions, thereby obtaining a light transmittance $T_1$. It is noted that the measurement was carried out by attaching the cured substance for a lens to an integrating sphere, and a randomly selected surface was set as the light incident surface.

(Measurement conditions)

Measurement device: UH4150 (ultraviolet-visible near-infrared spectrophotometer, manufactured by Hitachi High-Tech Science Corporation)

Measurement method: transmission method
Measurement wavelength: 400 nm
Reference: atmosphere
Detector: integrating sphere/photomultiplier tube (200 nm to 850 nm)
Integrating sphere: PbS (850 nm to 2,600 nm)

<Rate of change in light transmittance after heating (125°C, 168 hours)>

First, the cured substance for a lens was heated for 168 hours in an oven set at 125°C in an air atmosphere.

Thereafter, the light transmittance in the thickness direction was measured under the above conditions to obtain a light transmittance $T_2$ after heating, and a calculation was carried out according to the following expression. The results are shown in Table 1.

Rate (%) of change in light transmittance after heating (125°C, 168 hours) = $(T_1 - T_2)/T_1 \times 100$

<Evaluation of glass adhesiveness>

A glass substrate (7.0 × 7.0 × 0.21 mm, D263T ECO, manufactured by SCHOTT) was immersed in Novec (registered trademark) 1720 (fluorinated silane-based mold releasing agent, manufactured by 3M Company), heated at 100°C for 25 minutes in a nitrogen atmosphere, and rinsed with Novec (registered trademark) 7100 (fluorine-based solvent, manufactured by 3M Corporation) to obtain a mold release-treated glass substrate.

The resin composition for a lens was dropped onto the mold release-treated glass substrate and sandwiched with a glass substrate a glass substrate (7.0 × 7.0 × 0.21 mm, D263T ECO) which had not been subjected to the mold release treatment with a silicone spacer having a thickness of 250 μm being interposed therebetween, followed by fixing with a clip. In this case, the amount of the resin composition for a lens to be dropped was adjusted such that the diameter of the wettably spread resin composition was about 5 mm.

On the other hand, using an electrodeless lamp (H bulb), UV exposure was carried out such that the irradiation intensity at a wavelength of 365 nm was 150 mW/cm and the integrated irradiation amount was 3,000 mJ/ $cm^2$, and then the resin composition for a lens was cured. Subsequently, the mold release-treated glass substrate was released from the cured resin composition for a lens and heated at 120°C for 30 minutes in a nitrogen atmosphere to obtain a laminate (resin diameter: 5 mm) of the cured substance for a lens and the glass substrate.

In addition, A laminate (resin diameter: 40 mm) of the cured substance for a lens and the glass substrate was obtained by the same operation as described above, except that the amount of the resin composition for a lens to be dropped was adjusted such that the diameter of the resin composition was 40 mm.

Here, the laminates were evaluated by assigning A to a laminate in which no peeling was confirmed at the interface between the cured substance for a lens and the glass substrate, assigning B to a laminate in which no peeling occurred but the glass substrate was significantly deformed, and assigning C to a laminate in which the resin was easily peeled off from the substrate. The results are shown in Table 1.

[Table 1]

Table1

| | | | Example 1 | Example 2 | Example 3 | Example 4 | Example 5 | Example 6 | Example 7 | Example 8 | Comparative Example 1 |
|---|---|---|---|---|---|---|---|---|---|---|---|
| Photocationic polymerization initiator (X) | | Part by mass | 1 | 1 | 1 | 1 | 1 | 3 | 3 | 3 | |
| Another photocationic polymerization initiator | | Part by mass | | | | | | | | | 1 |
| Epoxy compound (Y) | | Part by mass | 100 | 50 | 100 | 60 | 60 | 90 | 80 | 55 | 100 |
| Monofunctional epoxy compound (Z) | | Part by mass | | 50 | | 40 | 40 | | 20 | 40 | |
| Oxetane compound (W) | | Part by mass | | | | | | 10 | | 5 | |
| Adhesiveness imparting agent | | Part by mass | | | 1 | | 1 | 1 | 1 | 1 | |
| Antioxidant | | Part by mass | | | 0.5 | | 0.5 | 0.5 | 0.5 | 0.5 | |
| Light stabilizer | | Part by mass | | | 0.1 | | 0.1 | 0.1 | 0.1 | 0.1 | |
| Viscosity (25°C) | | mPa·s | 4000 | 800 | 4000 | 1200 | 1200 | 1000 | 3000 | 1100 | 4000 |
| Curing shrinkage rate | | % | 1.8 | 3.0 | 1.9 | 2.8 | 2.7 | 2.1 | 2.2 | 2.6 | 2.0 |
| Refractive index | | - | 1.59 | 1.60 | 1.59 | 1.60 | 1.60 | 1.59 | 1.59 | 1.60 | 1.59 |
| Light transmittance | | % | 80.5 | 83.6 | 82.9 | 83.4 | 84.2 | 82.0 | 82.1 | 83.9 | 80.0 |
| Rate of change in light transmittance after heating (125°C, 168 hours) | | % | 4 | 2 | 3 | 2 | 1 | 1 | 2 | 1 | 80 |
| Glass adhesiveness | Laminate (resin diameter: 5 mm) | A to C | A | A | A | A | A | A | A | A | A |
| | Laminate (resin diameter: 40 mm) | A to C | B | A | A | A | A | A | A | A | B |

The rate of change in light transmittance after heating was reduced in Examples as compared with Comparative Examples. This means that coloring due to heating is suppressed. In addition, the curing shrinkage rate, the refractive index, and the light transmittance of Examples were at the same high levels as those of Comparative Examples. From these results, it can be seen that the resin composition for a lens of the present embodiment has all of a low curing shrinkage rate, a high refractive index, a high light transmittance, and a high heat resistance.

It is noted that in a case of comparing Examples with each other, it can be seen that the glass adhesiveness is improved in a case of containing one or two or more selected from the group consisting of the monofunctional epoxy compound (Z), the oxetane compound, and the adhesiveness imparting agent.

The present application claims priority based on Japanese Patent Application No. 2022-000161 filed on January 4, 2022, the entire content of which is incorporated herein by reference.

REFERENCE SIGNS LIST

1 wafer lens array
2 substrate
10 lens

## Claims

1. A resin composition for a lens, comprising:

 a photocationic polymerization initiator (X) including a salt formed from an anion represented by General Formula (1) and a cation; and
 an epoxy compound (Y) containing two or more epoxy groups in a molecule,

[Chem. 1]

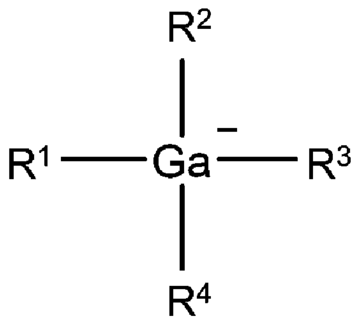

(1)

(in General Formula (1), $R^1$ to $R^4$ each independently represent an alkyl group having 1 to 18 carbon atoms or an aryl group having 6 to 14 carbon atoms).

2. The resin composition for a lens according to Claim 1, wherein the epoxy compound (Y) is represented by General Formula (2),

[Chem. 2]

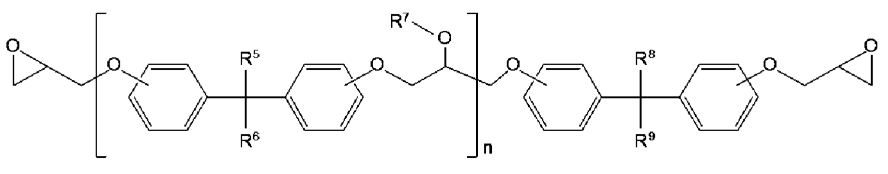

(2)

(in General Formula (2), $R^5$, $R^6$, $R^8$, and $R^9$ each independently represent a hydrogen atom, an alkyl group having 1 to 4 carbon atoms, or a trifluoromethyl group, $R^7$'s each independently represent a hydrogen atom or a glycidyl group,

and n is an average repetition number, where n represents a real number in a range of 0 to 30).

**3.** The resin composition for a lens according to Claim 1 or 2,
wherein an epoxy equivalent of the epoxy compound (Y) is 100 g/eq or more and 200 g/eq or less.

**4.** The resin composition for a lens according to any one of Claims 1 to 3,
wherein a content of the epoxy compound (Y) is 40% by mass or more in non-volatile components of the resin composition for a lens.

**5.** The resin composition for a lens according to any one of Claims 1 to 4,
wherein the photocationic polymerization initiator (X) contains, as an anion, an anion represented by any of Formula (3) or (4),
[Chem. 3]

Ga(C6F5)4 (3)

[Chem. 4]

$Ga[C_6H_3(CF_3)_2]_4^-$ (4)

**6.** The resin composition for a lens according to any one of Claims 1 to 5,
wherein the photocationic polymerization initiator (X) contains a sulfonium ion as the cation.

**7.** The resin composition for a lens according to any one of Claims 1 to 6, further comprising:

a monofunctional epoxy compound (Z) represented by General Formula (5),

[Chem. 5]

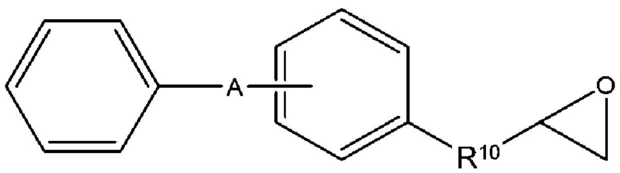
(5)

(in General Formula (5), A is selected from a single bond, an oxygen atom, and a sulfur atom, $R^{10}$ is an alkylene having 1 to 8 carbon atoms, and any methylene group may be substituted with an oxygen atom).

**8.** The resin composition for a lens according to Claim 7,
wherein the monofunctional epoxy compound (Z) is o-phenylphenol glycidyl ether.

**9.** The resin composition for a lens according to any one of Claims 1 to 8, further comprising:
an oxetane compound (W).

**10.** The resin composition for a lens according to Claim 9,
wherein the oxetane compound (W) is a biphenyl type oxetane compound.

**11.** The resin composition for a lens according to any one of Claims 1 to 10,
wherein in a case where the resin composition for a lens is subjected to a measurement with an E-type viscometer under conditions of a temperature of 25°C and a rotation speed of 2.5 rpm, a viscosity of the resin composition for a lens is 100 mPa·s or more and 5,000 mPa·s or less.

**12.** The resin composition for a lens according to any one of Claims 1 to 11,
wherein a cured substance satisfies the following requirements (A) to (D), where the cured substance is obtained by applying the resin composition for a lens onto a glass plate to a thickness of 250 um, carrying out UV exposure under conditions of a wavelength of 365 nm, an irradiation intensity of 150 mW/cm, and an integrated irradiation amount of

3,000 mJ/ $cm^2$, and carrying out heating under conditions of 120°C for 30 minutes in a nitrogen atmosphere,

(A) the cured substance has a curing shrinkage rate of 1.0% or more and 5.0% or less,
(B) the cured substance has a refractive index of 1.57 or more,
(C) the cured substance has a light transmittance of 80% or more in a thickness direction, and
(D) the cured substance has a rate of change in light transmittance after heating (125°C, 168 hours) of 10% or less in the thickness direction.

**13.** The resin composition for a lens according to any one of Claims 1 to 12, wherein the resin composition for a lens is used for a wafer-level lens.

**14.** A cured substance for a lens, which is obtained by curing the resin composition for a lens according to any one of Claims 1 to 13.

**15.** A lens comprising:
the cured substance for a lens according to Claim 14.

[Fig.1]

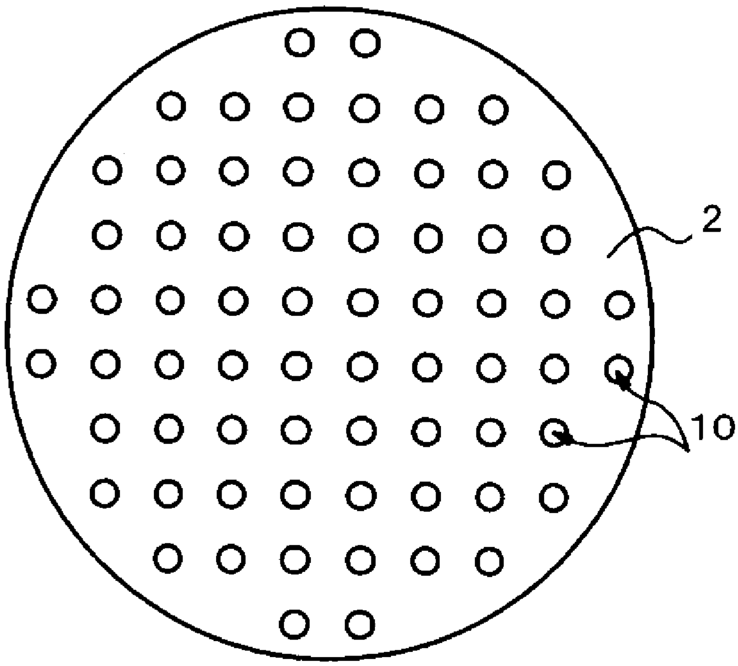

**INTERNATIONAL SEARCH REPORT**

International application No.
**PCT/JP2022/047192**

**A. CLASSIFICATION OF SUBJECT MATTER**

***G02B 1/04***(2006.01)i; ***C08G 59/68***(2006.01)i
FI: G02B1/04; C08G59/68

According to International Patent Classification (IPC) or to both national classification and IPC

**B. FIELDS SEARCHED**

Minimum documentation searched (classification system followed by classification symbols)

G02B1/04; C08G59/68

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-085533 A (SAN APRO KK) 06 June 2019 (2019-06-06) paragraphs [0026], [0051], [0054]-[0115], table 1 | 1-6, 9, 12, 14-15 |
| Y | paragraphs [0026], [0051], [0054]-[0115], table 1 | 7-8, 10-11, 13 |
| X | WO 2018/020974 A1 (SAN APRO KK) 01 February 2018 (2018-02-01) paragraphs [0004], [0115], [0167]-[0281], table 1 | 1-6, 9, 12, 14-15 |
| Y | paragraphs [0004], [0115], [0167]-[0281], table 1 | 7-8, 10-11, 13 |
| Y | WO 2016/031602 A1 (NITTO DENKO CORP.) 03 March 2016 (2016-03-03) paragraph [0050] | 7-8 |
| Y | WO 2005/085317 A1 (TOAGOSEI CO., LTD.) 15 September 2005 (2005-09-15) paragraph [0107] | 7-8 |
| Y | JP 2021-162620 A (MITSUI CHEMICALS, INC.) 11 October 2021 (2021-10-11) paragraphs [0048], [0105] | 10-11 |
| Y | JP 2021-059681 A (MITSUI CHEMICALS, INC.) 15 April 2021 (2021-04-15) paragraphs [0048], [0208] | 10-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 March 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/047192**

**C. DOCUMENTS CONSIDERED TO BE RELEVANT**

| Category* | Citation of document, with indication, where appropriate, of the relevant passages | Relevant to claim No. |
|---|---|---|
| Y | JP 2017-179330 A (TOKYO OHKA KOGYO CO., LTD.) 05 October 2017 (2017-10-05) paragraph [0002] | 13 |
| A | US 6384146 B1 (THE RESEARCH FOUNDATION OF STATE UNIVERSITY OF NEW YORK) 07 May 2002 (2002-05-07) entire document, fig. 1-12 | 1-15 |

Form PCT/ISA/210 (second sheet) (January 2015)

**INTERNATIONAL SEARCH REPORT**
**Information on patent family members**

International application No.
**PCT/JP2022/047192**

| Patent document cited in search report | Publication date (day/month/year) | Patent family member(s) | Publication date (day/month/year) |
|---|---|---|---|
| JP 2019-085533 A | 06 June 2019 | (Family: none) | |
| WO 2018/020974 A1 | 01 February 2018 | US 2019/0284134 A1<br>paragraphs [0004], [0092], [0151]-[0252], table 1<br>EP 3492476 A1<br>CN 109311915 A<br>KR 10-2019-0037230 A | |
| WO 2016/031602 A1 | 03 March 2016 | TW 201612628 A<br>JP 2016-50230 A | |
| WO 2005/085317 A1 | 15 September 2005 | KR 10-2007-0012386 A<br>CN 1926167 A<br>TW 200609262 A | |
| JP 2021-162620 A | 11 October 2021 | (Family: none) | |
| JP 2021-059681 A | 15 April 2021 | (Family: none) | |
| JP 2017-179330 A | 05 October 2017 | CN 107229185 A<br>KR 10-2017-0113221 A<br>TW 201802596 A | |
| US 6384146 B1 | 07 May 2002 | WO 2000/059968 A1<br>AU 4195100 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008545553 W
- JP 2003131004 A
- JP 2019189874 A
- WO 2018020974 A
- JP 5901070 B
- JP 5967824 B
- JP 2022000161 A